# EUROPÄISCHE PATENTSCHRIFT

(11) **EP 3 374 104 B1**
(45) Veröffentlichungstag und Bekanntmachung des Hinweises auf die Patenterteilung: **29.03.2023**
(21) Anmeldenummer: 16788087.1
(22) Anmeldetag: 26.10.2016
(51) Int. Cl.: B21D 43/24, B44B 5/02

(54) **ZUFÜHRVORRICHTUNG FÜR RONDENRINGE**
FEEDING DEVICE FOR CIRCULAR BLANK RINGS
DISPOSITIF D'ALIMENTATION POUR BAGUES RONDES

(30) Priorität: 12.11.2015 DE 102015119568
(43) Veröffentlichungstag der Anmeldung: 19.09.2018
(73) Patentinhaber: Schuler Pressen GmbH, 73033 Göppingen (DE)
(72) Erfinder: KNEER, Simon, 73054 Eislingen (DE); PRINZINGER, Helmut, 89558 Böhmenkirch (DE)
(74) Vertreter: Rüger Abel Patentanwälte PartGmbB
(86) Internationale Anmeldenummer: PCT/EP2016/075854
(87) Internationale Veröffentlichungsnummer: WO 2017/080832

(56) Entgegenhaltungen:
- US-A- 3 909 340
- US-A- 4 162 734
- US-A- 4 710 085

## Beschreibung

Die vorliegende Erfindung betrifft eine Zuführvorrichtung für Rondenringe. Die Zuführvorrichtung ist dazu eingerichtet, die an einer Aufnahmestelle insbesondere ungeordnet vorhandene Mehrzahl von Rondenringen in eine vorgegebene Anordnung zu bringen, beispielsweise aufzureihen und an einer Abgabestelle insbesondere einzeln abzugeben.

Eine Zuführvorrichtung ist z.B. aus DE 35 44 104 A1 bekannt. Dort ist ein Stapelmagazin oberhalb eines drehbaren Tellers angeordnet, aus dem Prägeteile einzeln in Taschen des Tellers abgegeben werden können. Das Stapelmagazin ist geteilt. Die oben eingegebenen Prägeteile sollen flach aufeinander gestapelt werden. Hierfür wird zumindest ein Teil des Stapelmagazins gegenüber einem anderen, feststehenden Teil des Stapelmagazins in Vibrationen versetzt, so dass sich die Prägestücke im Stapelmagazin flach aufeinander stapeln.

Innerhalb eines solchen Stapelmagazins benötigen die zugeführten Ronden- oder Münzteile ein gewisses Spiel, um nach unten fallen zu können. Bei kleinen Teilen, beispielsweise Ringteilen einer Ronde mit einer geringen radialen Ringbreite, kann dieses Spiel dazu führen, dass die Ringteile ineinander fallen und eine Blockade der Zuführung auftritt.

Aus US 3 909 340 A ist eine Zuführvorrichtung mit den Merkmalen des Oberbegriffs des Patentanspruches 1 bekannt.

Es kann daher als Aufgabe der vorliegenden Erfindung angesehen werden, eine Zuführvorrichtung zu schaffen, die Rondenringe zuverlässig an einer Aufnahmestelle zu einer Abgabestelle transportiert und an der Abgabestelle geordnet abgibt.

Diese Aufgabe wird durch eine Zuführvorrichtung mit den Merkmalen des Patentanspruches 1 gelöst.

Die Zuführvorrichtung ist dazu eingerichtet, eine beispielsweise ungeordnete Mehrzahl von Rondenringen an einer Aufnahmestelle in Empfang zu nehmen, zu ordnen und an einer Abgabestelle vorzugsweise einzeln abzugeben. Zwischen der Aufnahmestelle und der Abgabestelle ist ein Führungsdorn angeordnet. Der Führungsdorn erstreckt sich entlang einer Längsachse L von einem oberen Ende zu einem unteren Ende. Die Längsachse L ist vorzugsweise vertikal angeordnet, kann aber auch unter einem spitzen Winkel geneigt zur Vertikalen verlaufen. Der Führungsdorn ist bei einer bevorzugten Ausführungsform zumindest entlang eines Führungsabschnitts zylindrisch ausgeführt. Die Querschnittsform dieses Führungsabschnitts kann kreiszylindrisch, polygonal oder auch eine andere beliebige Form aufweisen, die beispielsweise an die Innenform der Rondenringe angepasst ist. Der Führungsdorn ist dazu eingerichtet, am Innenrand der zu transportierenden Rondenringe an mehreren in Umfangsrichtung verteilt angeordneten Stellen anzuliegen, so dass die Rondenringe entlang des Führungsdorns gleiten können. Die Gleitbewegung der Rondenringe entlang des Führungsdorns wird bevorzugt ausschließlich durch die Schwerkraft verursacht und kann optional durch Drück- oder Schiebemittel unterstützt werden.

An der Aufnahmestelle ist ein Einführkanal angeordnet. Der Einführkanal ist dem oberen Ende des Führungsdorns zugeordnet. Der Einführkanal ist koaxial zu der Längsachse angeordnet, so dass Rondenringe, die durch den Einführkanal fallen, auf den Führungsdorn sozusagen aufgefädelt werden und diesen umschließen.

Die Zuführvorrichtung weist außerdem eine Halteeinrichtung auf. Die Halteeinrichtung hat wenigstens ein Halteteil mit einer koaxial zu der Längsachse angeordneten Halteöffnung. Der Innendurchmesser der Halteöffnung ist größer als der Außendurchmesser des Führungsdorns. Dadurch ist in der Halteöffnung ein Ringkanal für die Rondenringe bereitgestellt. Der Führungsdorn durchsetzt die Halteöffnung zumindest teilweise und vorzugsweise vollständig.

Der Führungsdorn ist entlang der Längsachse beweglich und insbesondere lose angeordnet. Die Positionierung des Führungsdorns erfolgt bei einem Ausführungsbeispiel dadurch, dass sich der Führungsdorn über einen oder mehrere Rondenringe, die sich in der Halteöffnung befinden, an dem Halteteil abstützt. Dadurch ist es möglich, die Rondenringe an dem oberen Ende auf den Führungsdorn aufzubringen und die Rondenringe am unteren Ende des Führungsdorns wieder abzunehmen. Der Führungsdorn ist nicht über mechanische Mittel oder Einrichtungen unmittelbar gelagert oder geführt.

Es ist bevorzugt, wenn das obere Ende des Führungsdorns in den Einführkanal hineinragt. Dadurch ist sichergestellt, dass die Rondenringe nicht am Führungsdorn vorbeifallen, sondern auf den Führungsdorn aufgefädelt werden. Dabei verbleibt zwischen dem oberen Ende des Führungsdorns und dem Einführkanal ein ringförmiger Raum für die Rondenringe.

Bei einem Ausführungsbeispiel weist der Führungsdorn einen zylindrischen Führungsabschnitt auf, dessen Außenabmessung um ein Führungsspiel kleiner ist als die Innenabmessung der Rondenringe. Wie bereits erläutert, kann der Führungsabschnitt einen kreisförmigen Querschnitt, einen polygonalen Querschnitt oder eine andere regelmäßige oder unregelmäßige Querschnittsform aufweisen.

Der Führungsabschnitt kann dabei eine Mantelfläche aufweisen, die als Führungsfläche für die Rondenringe dient.

Alternativ zu dem zylindrischen Führungsabschnitt könnte der Führungsabschnitt auch durch mehrere radial von der Längsachse wegragende Stege gebildet sein, die in Umfangsrichtung um die Längsachse vorzugsweise regelmäßig verteilt angeordnet sind. Dadurch ergibt sich im Querschnitt gesehen eine Art sternförmige Anordnung. Der Innenrand der Rondenringe liegt dann an der jeweiligen sich entlang der Längsachse erstreckenden und beispielsweise parallel zur Längsachse verlaufenden Kante der Stege an. Die Führungsfläche für die Rondenringe ist dabei in Umfangsrichtung betrachtet nicht vollständig geschlossen, sondern bildet mehrere mit Abstand zueinander angeordnete Führungsstellen.

Das obere Ende des Führungsdorns kann eine kleinere Außenabmessung aufweisen als der Führungsabschnitt des Führungsdorns. Vorzugsweise ist die Außenabmessung des oberen Endes mindestens um den Faktor 2 oder 3 kleiner als die Innenabmessung der Rondenringe, so dass die Rondenringe mit hoher Sicherheit am oberen Ende auf den Führungsdorn aufgefädelt werden.

Bei einem Ausführungsbeispiel weist der Führungsdorn einen sich verjüngenden Abschnitt auf, beispielsweise einen konischen Abschnitt. Die Abmessung dieses sich verjüngenden Abschnitts nimmt in Richtung zum oberen Ende hin ab. Dieser sich verjüngende Abschnitt kann sich unmittelbar an das obere Ende anschließen oder zu dem oberen Ende gehören. Der sich verjüngende Abschnitt kann sich vorzugsweise unmittelbar an den Führungsabschnitt anschließen.

Vorzugsweise weist die Halteeinrichtung ein Füllrohr auf. Das Füllrohr umschließt einen Axialabschnitt des Führungsdorns. Zu diesem Axialabschnitt des Führungsdorns, der von dem Füllrohr umschlossen wird, gehört bei einem Ausführungsbeispiel zumindest ein Teil des Führungsabschnitts. Das Füllrohr ist vorzugsweise näher am unteren Ende des Führungsdorns angeordnet als am oberen Ende.

Die Halteeinrichtung kann bei einem Ausführungsbeispiel eine Zentrierhülse aufweisen. Die Zentrierhülse umschließt den Führungsdorn vorzugsweise koaxial zu dessen Längsachse. Die Zentrierhülse ist benachbart zu dem unteren Ende des Führungsdorns angeordnet und dazu eingerichtet, die Rondenringe an der Abgabestelle der Zuführvorrichtung in einer vorgegebenen Position zu positionieren.

Bei einer bevorzugten Ausführungsform hat die Zentrierhülse einen Zentrierkanal. Der Zentrierkanal erstreckt sich entlang des Führungsdorns und vorzugsweise koaxial zur Längsachse des Führungsdorns nach unten in Richtung auf die Abgabestelle zu und verjüngt sich dabei zumindest an mehreren Umfangsstellen. Beispielsweise kann der Zentrierkanal eine konische Form aufweisen, wenn die Außenkontur der Rondenringe kreisförmig ist. Der Zentrierkanal kann auch eine andere Querschnittsform aufweisen, die beispielsweise der Außenkontur der Rondenringe entsprechen kann. Es ist jedoch ausreichend, dass die Rondenringe an mehreren Umfangsstellen innerhalb des Zentrierkanals an der Zentrierhülse anliegen und dadurch radial zur Kanalachse positioniert werden.

Es ist vorteilhaft, wenn das der Abgabestelle zugeordnete untere Ende des Zentrierkanals eine Innenabmessung aufweist, die um ein vorgegebenes Zentrierspiel größer ist als die Außenabmessung der Rondenringe.

Bei einer vorteilhaften Ausführungsform ist an dem unteren Ende des Führungsdorns ein sich verjüngender Endabschnitt vorhanden. Dieser verjüngende Endabschnitt kann beispielsweise durch eine Fase und/oder einen Radius am Endabschnitt des Führungsdorns gebildet sein. Entlang des Endabschnitts kann sich die Außenfläche des Führungsdorns in einem Längsschnitt entlang der Längsachse betrachtet geradlinig oder gekrümmt erstrecken, so dass die Radialabmessung zum unteren Ende hin abnimmt. Der Endabschnitt hat in Richtung der Längsachse betrachtet eine Abmessung, die zumindest so groß ist wie die Dicke eines Rondenrings.

Erfindugsgemäß stützt sich der Führungsdorn mit seinem unteren Ende auf einer Transportfläche für die Rondenringe an der Abgabestelle ab. Bei einer Transportbewegung gleiten die Rondenringe entlang der Transportfläche. Durch einen Revolverteller, Schieber oder dergleichen kann der Rondenring unter dem Führungsdorn wegbewegt werden, der entlang seiner Längsachse beweglich angeordnet ist. Die Bewegung des Führungsdorns wird durch eine Antriebseinrichtung verursacht.

Der Führungsdorn wird durch eine Antriebseinrichtung entlang seiner Längsachse bewegt oder dauerhaft von einer Transportfläche an der Abgabestelle angehoben. Die Antriebseinrichtung wirkt durch ein körperloses Medium oder Magnetfeld ohne mechanische Mittel auf den Führungsdorn ein. Bei einem Ausführungsbeispiel kann der Führungsdorn in einem Magnetfeld mit Abstand zur Transportfläche gehalten oder zur Abgabe eines Rondenrings von der Transportfläche abgehoben werden. Bei einem anderen Ausführungsbeispiel kann der Führungsdorn mittels Druckluft mit Abstand zur Transportfläche gehalten oder zur Abgabe eines Rondenrings von der Transportfläche angehoben werden.

Der Führungsdorn stützt sich bei den bevorzugten Ausführungsbeispielen mittelbar über einen oder mehrere Rondenringe in der wenigstens einen Halteöffnung am Halteteil ab und ist ansonsten lose entlang seiner Längsachse beweglich angeordnet.

Vorteilhafte Ausführungen der Zuführvorrichtung ergeben sich aus den abhängigen Patentansprüchen, der Beschreibung und den Zeichnungen. Nachfolgend werden bevorzugte Ausführungsbeispiele der Zuführvorrichtung anhand der beigefügten Zeichnung im Einzelnen erläutert. Es zeigen:
Fig. 1 eine schematische blockschaltbildähnliche Darstellung einer Transporteinrichtung mit einer Zuführvorrichtung,
Fig. 2 ein Ausführungsbeispiel einer Ronde bestehend aus zwei Rondenringen und einem Rondenkern,
Fig. 3 eine Draufsicht auf eine aus den Bestandteilen gemäß Fig. 2 geprägten Münze,
Fig. 4 die Münze aus Fig. 3 in einem Querschnitt,
Figuren 5 bis 8 jeweils Ausführungsbeispiele einer Zuführvorrichtung in einem schematischen Längsschnitt.

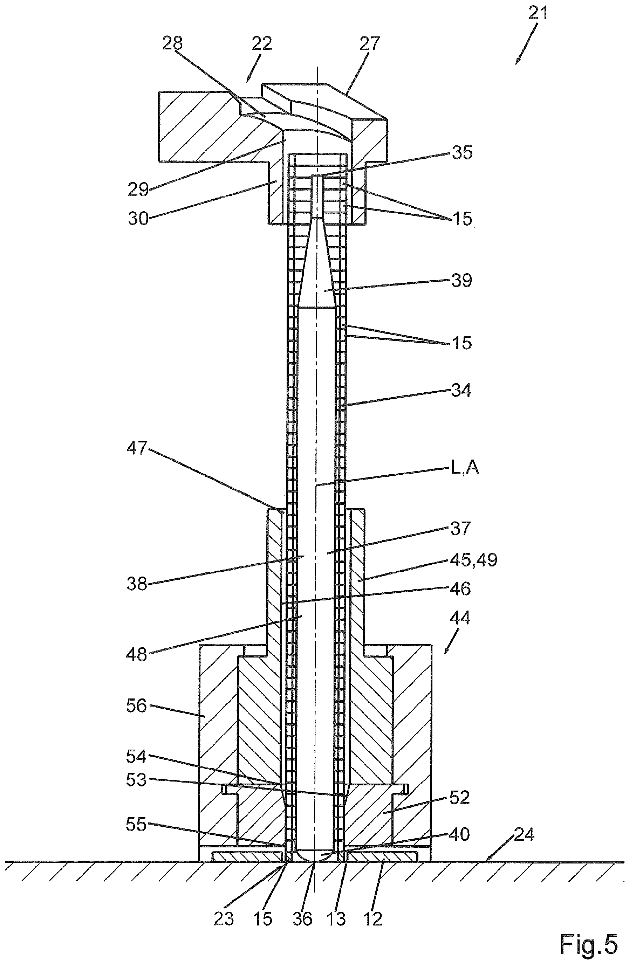

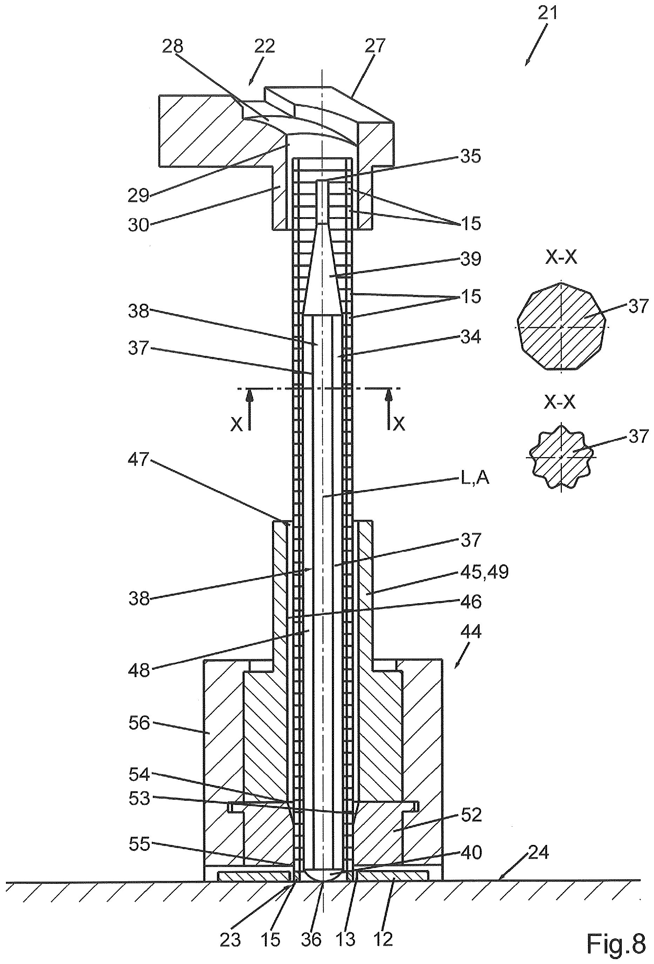

Die Ausführungsbeispiele der Figuren 5 und 8 sind nicht erfindungsgemäß und dienen lediglich der Veranschaulichung.

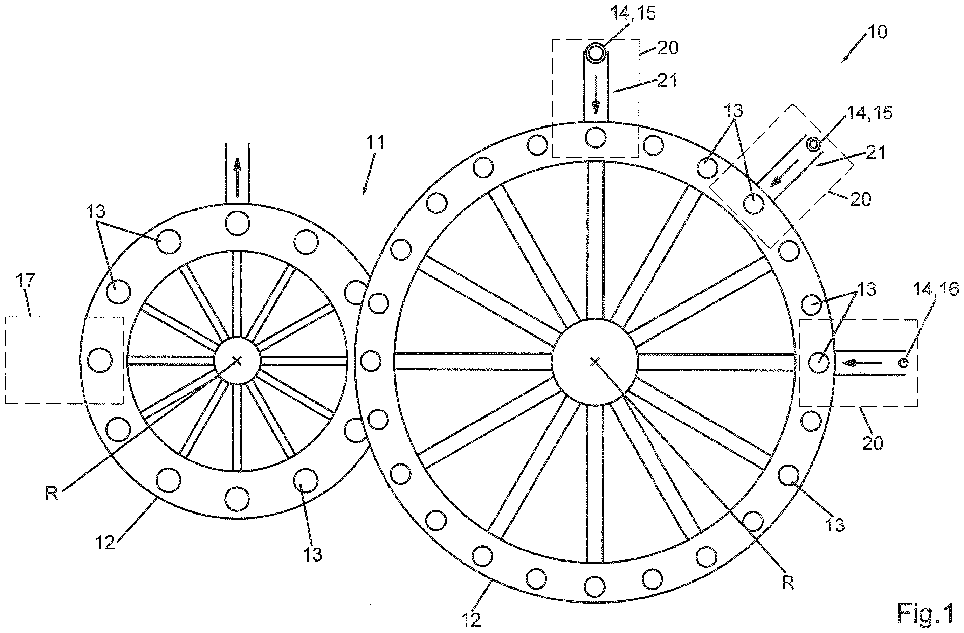

In Fig. 1 ist eine Anordnung 10 mit einer Transporteinrichtung 11 veranschaulicht. Die Transporteinrichtung 11 weist beim Ausführungsbeispiel zwei Revolverteller 12 auf, die um jeweils eine Revolverachse R antreibbar sind. Die beiden Revolverachsen R sind parallel zueinander ausgerichtet. Jeder Revolverteller 12 ist durch einen nicht dargestellten Revolverantrieb um seiner Revolverachse R antreibbar. Die Revolverteller 12 führen dabei eine Schrittschaltbewegung aus. Der Schrittschaltwinkel ist angepasst an eine Anzahl von Taschen 13, die am Außenumfangsbereich jeder Revolvertellers 12 in Umfangsrichtung um die jeweilige Revolverachse R gleichmäßig verteilt angeordnet sind. Die Taschen 13 dienen zur Aufnahme jeweils eines Rondenteils 14 oder einer Ronde aus mehreren Rondenteilen 14. Ein Rondenteil 14 kann durch einen Rondenring 15 oder einen Rondenkern 16 gebildet sein. Jede Ronde besteht aus wenigstens einem Rondenring 15 und einem Rondenkern 16. Bei dem hier beschriebenen Ausführungsbeispiel sind zwei Rondenringe 15 und ein Rondenkern 16 zur Bildung der Ronde vorgesehen.

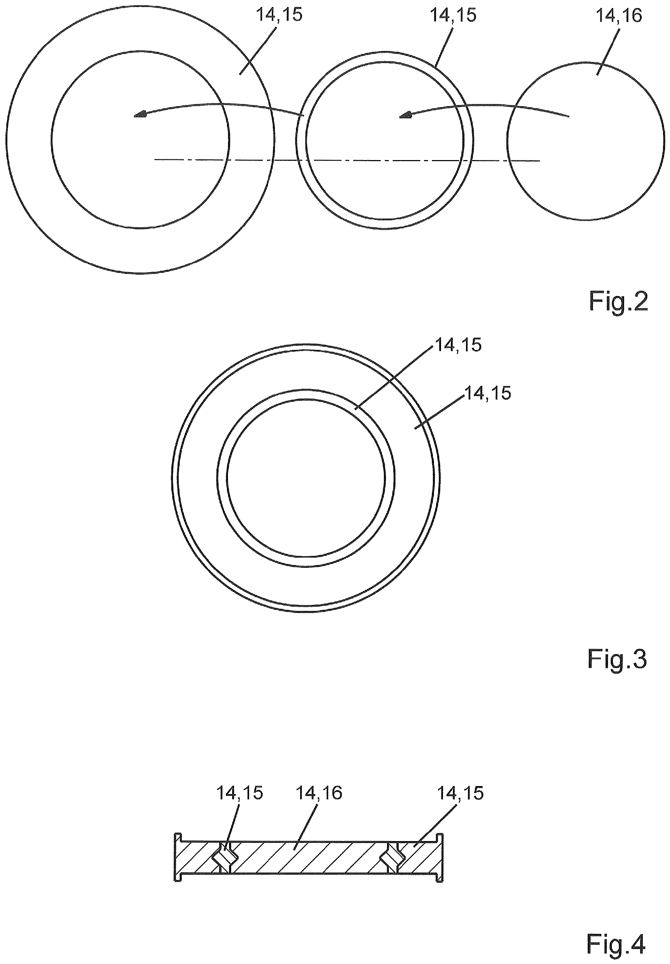

Die Ronde kann auch als Münzrohling bezeichnet werden. Über die Transporteinrichtung 11 wird die Ronde zu einer Prägestation 17 mit einer Prägepresse transportiert und dort geprägt. Die geprägte Münze ist schematisch in den Figuren 3 und 4 veranschaulicht. Dabei sind die einzelnen Rondenteile 14 kraftschlüssig und beispielsgemäß zusätzlich formschlüssig miteinander verbunden.

Zum Zuführen der Rondenteile 14 zu einem zugeordneten Revolverteller 12 ist jeweils eine Zuführstation 20 vorhanden. An jeder Zuführstation 20 wird eines der Rondenteile 14 zugeführt. Bei dem hier beschriebenen Ausführungsbeispiel sind dementsprechend drei Zuführstationen 20 für die beiden Rondenringe 15 und den Rondenkern 16 vorgesehen. An jeder Zuführstation 20 wird in jeweils eine an der Zuführstation 20 angeordnete Tasche 13 des betreffenden Revolvertellers 12 ein Rondenring 15 bzw. Rondenkern 16 eingesetzt. Anschließend wird der Revolverteller 12 durch eine Schrittschaltbewegung weitergedreht, so dass die nächste Tasche 13 der Zuführstation 20 zugeordnet ist und das nächste Rondenteil 14 in die zugeordnete Tasche 13 eingesetzt werden kann. Vor der Prägestation 17 befindet sich in jeder Tasche 13 somit eine Ronde aus den beispielsgemäß drei Rondenteilen 14, aus der dann die in den Figuren 3 und 4 veranschaulichte Münze geprägt wird.

An jeder Zuführstation 20 zum Zuführen eines Rondenrings 15 ist eine Zuführvorrichtung 21 vorgesehen, von der in den Figuren 5 bis 8 verschiedene Ausführungsbeispiele veranschaulicht sind. Die Zuführvorrichtung 21 ist dazu eingerichtet, die an einer Aufnahmestelle 22 ungeordnet ankommende Mehrzahl von Rondenringen 15 in eine vorgegebene Anordnung bzw. Ordnung zu bringen und an einer Abgabestelle 23 einzeln abzugeben. Der Aufnahmestelle 22 kann auch eine Einrichtung, wie etwa eine trichterförmige Führung, vorgeschaltet sein, so dass die Rondenringe 15 in einer Reihe hintereinander an der Aufnahmestelle 22 ankommen. Die Abgabestelle 23 ist dem Revolverrad 12 zugeordnet. Die Zuführvorrichtung 21 gibt die Rondenringe 15 einzeln in die jeweils zugeordnete Tasche 13 des Revolvertellers 12 ab. Wie aus den Figuren 5 bis 8 zu erkennen ist, bewegt sich der Revolverteller 12 entlang einer Transportfläche 24, auf der die Rondenringe beim Transport aufliegen und entlanggleiten. Die Transportfläche 24 ist in den Figuren 5 bis 8 lediglich stark vereinfacht veranschaulicht. Sie kann auf eine Ringfläche entlang der Bahn der Taschen 13 begrenzt sein.

Fig. 5 zeigt ein erstes Ausführungsbeispiel der Zuführvorrichtung 21. An der Aufnahmestelle 22 ist ein Einführteil 27 angeordnet. Das Einführteil 27 ist über ein Maschinengestell ortsfest auf einem Untergrund angeordnet. An dem Einführteil 27 kommen die Platinenringe 15 beispielsweise ungeordnet oder in einer Reihe an und werden am Einführteil 27 mittels eines Trichters oder dergleichen in eine nutähnliche Einführbahn 28 im Einführteil 27 geleitet. Die Einführbahn 28 kann gegenüber der Horizontalen zu einem Einführkanal 29 hin geneigt sein, um den Transport der Rondenringe 15 zu bewirken oder zu unterstützen. Der Transport der Rondenringe 15 entlang der Einführbahn 28 kann auch durch nicht dargestellte Einrichtungen erfolgen, die die Rondenringe 15 zu dem Einführkanal 29 hin schieben. Der Einführkanal 29 ist in einem rohrförmigen Stutzen 30 des Einführteils 27 ausgebildet und erstreckt sich beim Ausführungsbeispiel koaxial zu einer Arbeitsachse A. Die Arbeitsachse A ist bevorzugt vertikal ausgerichtet oder gegenüber der Vertikalen um lediglich einen spitzen Winkel von maximal 15° geneigt. Die Länge des Einführkanals 29 kann variieren. Dadurch kann der Stutzen 30 eine entsprechend angepasste Länge aufweisen oder alternativ entfallen.

Bei dem hier veranschaulichten Ausführungsbeispiel werden Rondenringe 15 mit einer kreisförmigen Außenkontur und einer kreisförmigen Innenkontur zugeführt. Die Konturen der die Rondenringe 15 führenden Bestandteile der Zuführvorrichtung 21 haben daher ebenfalls eine kreisrunde Querschnittsform. Deshalb wird im Zusammenhang mit dem Ausführungsbeispiel nach Fig. 5 von Durchmessern gesprochen. Bei gewellten, polygonalen oder anderen Konturen der Rondenringe können entsprechend angepasste Außen- bzw. Innenabmessungen der Bestandteile der Zuführvorrichtungen 21 vorgesehen werden, was im Zusammenhang mit Fig. 8 im Folgenden noch erläutert wird.

Der Einführkanal 29 hat einen Innendurchmesser, der größer ist als der Außendurchmesser der Rondenringe 15. Dadurch ist sichergestellt, dass die Rondenringe 15 ohne Blockierung durch den Einführkanal 29 nach unten fallen können.

Die Zuführvorrichtung 21 weist einen Führungsdorn 34 auf. Der Führungsdorn 34 erstreckt sich entlang einer Längsachse L von einem oberen Ende 35 zu einem unteren Ende 36. Die Längsachse L ist vorzugsweise parallel oder mit maximal einem Neigungswinkel von bis zu 5°, 10° oder 15° gegenüber der Arbeitsachse A geneigt, die durch den Einführkanal 29 definiert ist. Der Führungsdorn 34 ist relativ zum Einführkanal 29 bzw. zum Einführteil 27 bewegbar, insbesondere in Richtung seiner Längsachse L bzw. in Richtung der Arbeitsachse A. Das obere Ende 35 ist beim Ausführungsbeispiel innerhalb des Einführkanals 29 angeordnet, so dass sich ein axialer Abschnitt des Führungsdorns 34, der an das obere Ende 35 angrenzt, innerhalb des Einführkanals 29 befindet. Das untere Ende 36 ist der Abgabestelle 23 zugeordnet und es stützt sich beim Ausführungsbeispiel nach Fig. 5 auf der Transportfläche 24 ab, wenn eine Tasche 13 des Revolvertellers 12 der Zuführvorrichtung 21 zugeordnet ist und die Längsachse L des Führungsdorns 34 in etwa mittig in die Tasche 13 hineinragt.

Der Führungsdorn 34 hat einen Führungsabschnitt 37, dessen Mantelfläche eine Führungsfläche 38 bildet. Die Länge des Führungsabschnitts 37 entlang der Längsachse L ist größer als die der anderen Abschnitte des Führungsdorns 34. Der Führungsabschnitt 37 hat beim Ausführungsbeispiel eine zylindrische Gestalt und insbesondere einen kreisförmigen Querschnitt.

Die Außenabmessung und beispielsgemäß der Außendurchmesser des Führungsabschnitts 37 ist um ein Führungsspiel kleiner als die Innenabmessung und beispielsgemäß der Innendurchmesser des Rondenrings 15. Die Rondenringe 15 können daher entlang der Führungsfläche 38 klemmfrei gleiten und sind dabei in etwa koaxial zu der Längsachse L des Führungsdorns 34 ausgerichtet. Das Führungsspiel kann beispielsweise maximal 1,0 mm bis 1,5 mm oder bis 2,0 mm betragen.

An den Führungsabschnitt 37 schließt sich ein sich verjüngender Abschnitt und beispielsgemäß ein konischer Abschnitt 39 an. Durch den konischen Abschnitt 39 verringert sich der Außendurchmesser des Führungsdorns 34 ausgehend von Führungsabschnitt 37 in Richtung auf das obere Ende 35 zu. Der konische Abschnitt 39 kann sich bis zum oberen Ende 35 hin erstrecken. Bei dem hier beschriebenen Ausführungsbeispiel ist ein weiterer zylindrischer Abschnitt im Anschluss an das obere Ende 35 vorgesehen, der sich an den konischen Abschnitt 39 anschließt. Der Außendurchmesser am oberen Ende 35 ist kleiner und vorzugsweise zumindest um den Faktor 2 bis 3 kleiner als der Außendurchmesser des Führungsabschnitts 37. Dadurch wird sichergestellt, dass sich die Rondenringe 15 innerhalb des Einführkanals 29 auf den Führungsdorn 34 auffädeln und nicht am oberen Ende 35 anschlagen und innerhalb des Einführkanals 29 verklemmt bzw. blockiert werden kann.

In Abwandlung zu dem dargestellten Ausführungsbeispiel kann sich der Führungsdorn am oberen Ende 35 auch konisch und/oder konvex gekrümmt und/oder kugelkalottenförmig bis auf einen Punkt verjüngen. Er kann am oberen Ende 35 ohne ebene Stirnfläche ausgeführt sein.

Im Anschluss an das untere Ende 36 weist der Führungsdorn 34 einen Endabschnitt 40 auf, der sich zum unteren Ende 36 hin verjüngt. Die Länge dieses Endabschnitts 40 entlang der Längsachse L ist mindestens so groß wie die Dicke bzw. Stärke eines Rondenrings 15 entlang der Längsachse L.

Der sich verjüngende Endabschnitt 40 kann beispielsweise eine Kalottenform und/oder eine Konusform aufweisen. Im Längsschnitt entlang der Längsachse L betrachtet kann sich die Mantelfläche geradlinig oder konvex gekrümmt vom Führungsabschnitt 37 zum unteren Ende 36 hin erstrecken und dabei den Außendurchmesser des Führungsdorns 34 verringern.

An der Transportfläche 24 ist eine Halteeinrichtung 44 angeordnet. Die Halteeinrichtung 44 hat ein Halteteil 45 mit einer zylindrischen Halteöffnung 46. Die Halteöffnung 46 ist koaxial zur Arbeitsachse A ausgerichtet. Der Stutzen 30 mit dem Einführkanal 29 ist in Richtung der Arbeitsachse A mit Abstand zu dem Halteteil 45 mit der Halteöffnung 46 angeordnet.

Der Innendurchmesser der Halteöffnung 45 ist größer als der Außendurchmesser des Führungsdorns 34 und insbesondere des Führungsabschnitts 37, so dass in der Halteöffnung 46 ein Ringkanal 47 für die Rondenringe 15 gebildet ist. Der Innendurchmesser der Halteöffnung 46 ist größer als der Außendurchmesser der Rondenringe 15.

Innerhalb der Halteöffnung 46 verläuft ein Axialabschnitt 48 des Führungsdorns 34, der beispielsgemäß durch einen Bereich des Führungsabschnitts 37 gebildet ist. Das Halteteil 45 ist beispielsgemäß durch ein Füllrohr 49 gebildet. Zusätzlich zu dem Füllrohr 49 kann die Halteeinrichtung 44 optional auch weitere Halteteile aufweisen. Die Halteteile können entlang der Arbeitsachse A unmittelbar benachbart oder mit Abstand versetzt zueinander angeordnet sein.

An das Füllrohr 49 bzw. das Halteteil 45 schließt sich beim Ausführungsbeispiel der Halteeinrichtung 44 eine Zentrierhülse 52 an. Die Zentrierhülse 52 hat einen Zentrierkanal 53, der koaxial zu der Arbeitsachse A ausgerichtet ist. Der Zentrierkanal 53 erstreckt sich vollständig durch die Zentrierhülse 52 von einer oberen Öffnung 54 zu einer unteren Öffnung 55. Der Zentrierkanal 53 verjüngt sich zumindest entlang wenigstens eines Abschnitts zwischen der oberen Öffnung 54 und der unteren Öffnung 55. Beim Ausführungsbeispiel schließt sich an die obere Öffnung 54 ein konischer Abschnitt an, der in einen zylindrischen Abschnitt des Zentrierkanals 53 übergeht, der sich an die untere Öffnung 55 anschließt. In dem Bereich der unteren Öffnung 55 ist der Innendurchmesser des Zentrierdurchmessers 53 nur um ein geringes Zentrierspiel größer als der Außendurchmesser der Rondenringe 15, so dass diese mit der vorgegebenen, erforderlichen Präzision koaxial zu der Arbeitsachse A positioniert werden.

Das Füllrohr 49 und die Zentrierhülse 52 werden durch einen Haltekörper 56 der Halteeinrichtung 44 gemeinsam gehalten und beispielsgemäß an der Transportfläche 24 angeordnet.

Die Zuführvorrichtung 21 gemäß Fig. 5 arbeitet wie folgt:
An der Aufnahmestelle 22 werden die Rondenringe 15 geordnet oder ungeordnet zugeführt und gelangen in die Einführbahn 28, von der aus sie in den Einführkanal 29 gleiten. Im Einführkanal 29 fallen die Rondenringe 15 nach unten und fädeln dabei auf den Führungsdorn 34 auf. Die Rondenringe 15 umschließen somit die Längsachse L des Führungsdorns 34 im Wesentlichen koaxial. Sie können entlang dem Führungsdorn 34 nach unten gleiten. Wie in Fig. 5 veranschaulicht, bildet sich dadurch ein Stapel von Rondenringen 15 um den Führungsdorn 34. Jeweils benachbarte Rondenringe 15 liegen aneinander an. Der benachbart zum unteren Ende 36 angeordnete Rondenring 15 liegt in der der Zuführvorrichtung 21 zugeordneten Tasche 13 auf der Transportfläche 24 auf. Der Führungsdorn 34 stützt sich auf der Transportfläche 24 ab. Durch die Schrittschaltbewegung des Revolvertellers 12 wird der Rondenring 15 in der Tasche 13 mit dem Revolverteller 12 mitbewegt und gelangt in Kontakt mit dem Endabschnitt 40 des Führungsdorns 34. Durch die sich zum unteren Ende 36 hin verjüngende Form des Endabschnitts 40 wird der Führungsdorn 34 bei fortgesetzter Bewegung des Rondenrings 15 in der Tasche 13 entlang seiner Längsachse L nach oben bewegt und gibt den untersten Rondenring15 frei. Sobald die nächste Tasche unterhalb des Führungsdorns 34 ankommt, greift der Führungsdorn 34 mit seinem Endabschnitt 40 wieder in die nächste Tasche 13 ein. Ist diese Tasche 13 unter dem Stapel der Rondenringe 15 angeordnet, wird der nunmehr unterste Rondenring 15 in die Tasche 13 gedrückt. Dadurch entsteht wiederum die Situation, wie sie in Fig. 5 veranschaulicht ist. Bei der nächsten Schrittschaltbewegung des Revolvertellers wird der unterste Rondenring 15 wie vorstehend beschrieben von der Zuführvorrichtung 21 bzw. aus der Zuführstation 20 weg bewegt und der beschriebene Ablauf wiederholt sich.

Der Führungsdorn 34 ist nicht unmittelbar mechanisch in der Zuführvorrichtung 21 geführt oder gehalten. Er stützt sich mittelbar über einen und beispielsgemäß mehrere Rondenringe 15 an der Zentrierhülse 52 bzw. am Halteteil 45 ab. Gemäß dem dort vorhandenen Spiel wird die Längsachse L des Führungsdorns 34 in etwa entlang der Arbeitsachse A ausgerichtet, wobei die Längsachse L leicht geneigt und/ oder versetzt zur Arbeitsachse A verlaufen kann. Der Führungsdorn 34 ist daher sozusagen lose entlang seiner Längsachse L bewegbar angeordnet. Dadurch besteht die Möglichkeit, an der Aufnahmestelle 22 Rondenringe auf den Führungsdorn 34 aufzufädeln bzw. aufzustecken und an der Abgabestelle 23 von Führungsdorn 34 abzunehmen und weiter zu transportieren.

Das in Fig. 8 veranschaulichte Ausführungsbeispiel der Zuführvorrichtung 21 entspricht im Wesentlichen dem in Fig. 5 gezeigten Ausführungsbeispiel. Der Unterschied besteht darin, dass beim Ausführungsbeispiel nach Fig. 8 der Führungsabschnitt 37 des Führungsdorns 34 keinen kreisrunden Querschnitt aufweist. Er ist zylindrisch ausgeführt und kann beispielsweise einen polygonalen oder einen Querschnitt mit wellenförmiger Kontur aufweisen, was in Fig. 8 durch die beispielhaften Querschnittsbilder (Schnittlinie X-X) veranschaulicht ist. Außerhalb des Führungsabschnitts 37 weist der Führungsdorn 34 beim Ausführungsbeispiel an jeder Stelle einen kreisrunden Querschnitt auf und kann beispielsweise kalottenförmige Abschnitte, konische Abschnitte oder kreiszylindrische Abschnitte aufweisen. Ansonsten ist das Ausführungsbeispiel nach Fig. 8 identisch zum Ausführungsbeispiel gemäß Fig. 5, so dass auf die vorstehenden Erläuterungen verwiesen werden kann.

Bei dem in Fig. 8 gezeigten Ausführungsbeispiel können auch die Querschnittsformen des Zentrierkanals 53 und/oder des Einführkanals 29 und/oder der Halteöffnung 46 an die Außenkontur der Rondenringe 15 angepasst sein und beispielsweise - abgesehen vom jeweils erforderlichen Spiel - mit der Außenkontur der Rondenringe 15 übereinstimmen.

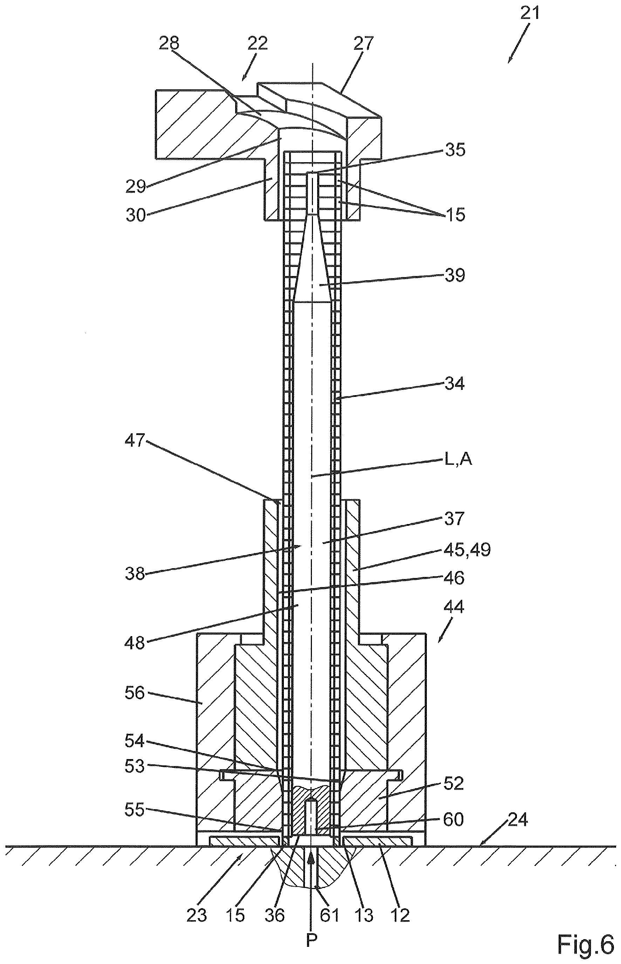

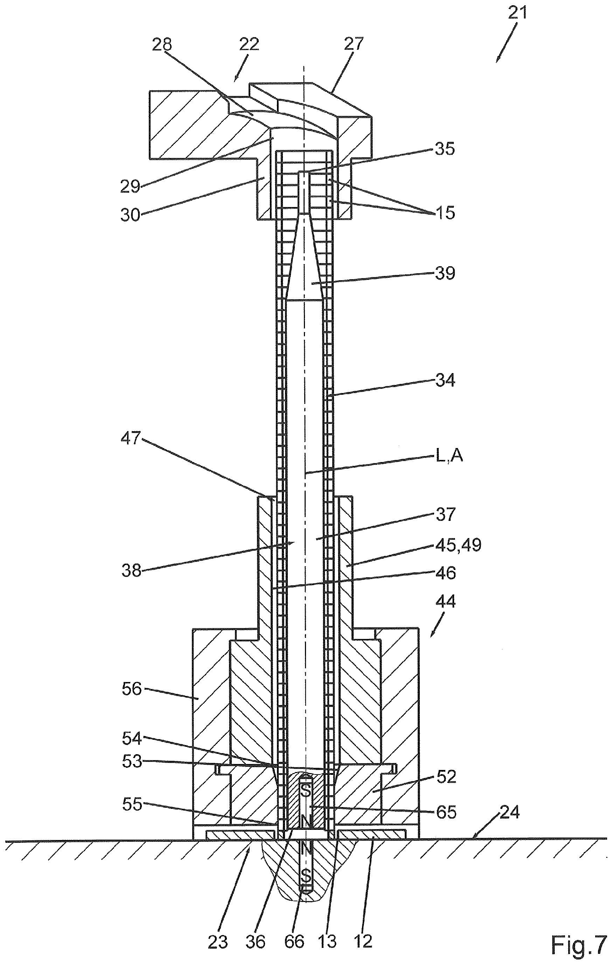

In den Fig. 6 und 7 ist jeweils ein Ausführungsbeispiel einer Zuführvorrichtung nach der Erfindung gezeigt, bei dem eine Antriebseinrichtung vorhanden ist, um den Führungsdorn 34 an der Abgabestelle 23 zeitweise oder dauerhaft von der Transportfläche 24 anzuheben. Die Antriebseinrichtung kann dazu Druckluft, eine magnetisches Feld oder ein anderes körperloses, nicht mechanisches Mittel oder Medium verwenden.

In Fig. 6 ist ein abgewandeltes Ausführungsbeispiel der Zuführvorrichtung 21 veranschaulicht. Im Unterschied zu dem Ausführungsbeispiel aus Fig. 5 schließt sich an das untere Ende 36 des Führungsdorns 34 kein sich verjüngender Endabschnitt 40 an. Beispielsgemäß verläuft der Führungsabschnitt 37 bis zum unteren Ende 36. Das untere Ende 36 kann in Abwandlung zu der ebenen Endfläche auch eine andere Gestalt, beispielsweise eine Konizität oder eine Kalottenform aufweisen. In das untere Ende 36 ist vorzugsweise ein Sackloch 60 eingebracht, das beispielsweise entlang der Längsachse L ausgerichtet ist und am unteren Ende 36 ausmündet.

Entlang der Arbeitsachse A mündet an der Transportfläche 24 an der Abgabestelle 23 ein Druckluftkanal 61 aus. Durch den Druckluftkanal 61 kann permanent oder stoßweise Druckluft P ausgestoßen werden. Die Druckluft P trifft auf das untere Ende 36 auf und dringt beispielsgemäß in das Sackloch 60 ein. Dadurch wird der Führungsdorn 34 von der Transportfläche 24 angehoben. Der jeweils unterste Rondenring 15, der sich in der Tasche 13 befindet, kann bei angehobenem Führungsdorn 34 an der Abgabestelle 23 durch den Revolverteller 12 abtransportiert werden.

Die Druckluft P kann permanent oder nur dann ausgestoßen werden, wenn eine Schrittschaltbewegung durch den Revolverteller ausgelöst wird. Der Druckluftausstoß wird ohnehin durch den Revolverteller 12 unterbrochen, wenn sich oberhalb des Druckluftkanals 61 keine Tasche 13, sondern eine geschlossene Fläche des Revolvertellers 12 befindet. Während dieser Zeit kann der Druckluftausstoß unterbrochen werden, um den Druckluftverbrauch zu minimieren.

Bei diesem Ausführungsbeispiel findet an der Abgabestelle 23 kein Kontakt zwischen dem Führungsdorn 34 und dem abzuführenden Rondenring 15 statt, der zur Bewegung des Führungsdorns 34 entlang seiner Längsachse L führt. Vielmehr wird der Führungsdorn 34 durch ein körperloses Medium und beispielsgemäß Druckluft von der Transportfläche 24 wegbewegt.

Ein weiteres abgewandeltes Ausführungsbeispiel ist in Fig. 7 veranschaulicht. Entsprechend dem Ausführungsbeispiel nach Fig. 6 wird der Führungsdorn 34 von der Transportfläche 24 ohne mechanische Einwirkung angehoben und entlang der Längsachse L bewegt. Anstelle von Druckluft P wird beim Ausführungsbeispiel nach Fig. 7 ein Magnetfeld verwendet. Hierzu ist im Anschluss an das untere Ende 36 ein Permanentmagnet 65 in den Führungsdorn 34 eingesetzt. Beim Ausführungsbeispiel ist der Nordpol N des Permanentmagneten 65 dem unteren Ende 36 zugeordnet. Der Permanentmagnet 65 ist entlang der Längsachse L ausgerichtet und schließt sich unmittelbar an das untere Ende 36 an. Das untere Ende 36 kann in Abwandlung zu der ebenen Endfläche auch eine andere Gestalt, beispielsweise eine Konizität oder eine Kalottenform aufweisen.

Entlang der Arbeitsachse A ist unmittelbar im Anschluss an die Transportfläche 24 ein weiterer Permanentmagnet 66 an der Abgabestelle 23 angeordnet, dessen Nordpol N dem unteren Ende 36 zugewandt ist. Die Magnetfelder der beiden Permanentmagneten 65, 66 stoßen sich ab, so dass der Führungsdorn 34 von der Transportfläche 24 weggedrängt wird. Dadurch verbleibt zwischen dem unteren Ende 36 und der Transportfläche 24 ein Spalt, durch den der jeweils unterste Rondenring 15 an der Abgabestelle 23 weg transportiert werden kann.

Anstelle des Permanentmagneten 66 könnte auch ein Elektromagnet verwendet werden. Analog zu der Ausführung mit der Druckluft P gemäß Fig. 6 kann das Magnetfeld des Elektromagneten permanent oder immer nur dann erzeugt werden, wenn ein Anheben des Führungsdorns 34 von der Transportfläche 24 beim Wegtransportieren eines Rondenrings 15 erforderlich ist.

Es versteht sich, dass die Magnetfelder in Abwandlung zur Darstellung nach Fig. 7 auch umgekehrt ausgerichtet sein könnten. So könnten die beiden Permanentmagnete 65, 66 jeweils gedreht angeordnet sein, so dass die beiden Südpole S unmittelbar benachbart angeordnet sind und sich abstoßen.

Die Erfindung betrifft eine Zuführvorrichtung 21 um eine geordnete oder ungeordnete Menge von Rondenringen 15 an einer Aufnahmestelle 22 aufzunehmen, zu ordnen und vereinzelt an einer Abgabestelle 23 abzugeben. Hierzu weist die Zuführvorrichtung 21 an der Aufnahmestelle 22 einen Einführkanal 29 auf, der koaxial zu einer Arbeitsachse A angeordnet ist. An der Abgabestelle 23 ist eine Transportfläche 24 vorgesehen, entlang der die Rondenringe 15 vereinzelt abgeführt werden. Die Zuführvorrichtung 21 verfügt über eine Halteeinrichtung 44 mit einem Halteteil 45, das eine vorzugsweise zylindrische Halteöffnung 46 begrenzt. Die Halteöffnung 46 ist koaxial zur Arbeitsachse A ausgerichtet. Ein Führungsdorn 34 erstreckt sich entlang einer Längsachse L von einem oberen Ende 35, das der Aufnahmestelle 22 zugeordnet ist, zu einem unteren Ende 36, das der Abgabestelle 23 zugeordnet ist. Die Längsachse L ist im Wesentlichen entlang der Arbeitsachse A ausgerichtet. Der Führungsdorn 34 ist nicht durch mechanische Mittel unmittelbar gehalten oder geführt. Er stützt sich über einen oder mehrere Rondenringe 15, die den Führungsdorn 34 koaxial umschließen, in der Halteöffnung 46 am Halteteil 45 und/oder im Einführkanal 29 ab. Dadurch ist der Führungsdorn 34 insbesondere entlang seiner Längsachse L frei lose beweglich angeordnet. Auf diese Weise lassen sich die Rondenringe 15 am oberen Ende 35 auf den Führungsdorn 34 auffädeln bzw. aufbringen und können entlang des Führungsdorns 34 koaxial zur Längsachse L gestapelt werden. An der Abgabestelle 23 können die Rondenringe 15 vom Führungsdorn 34 abgenommen werden, indem dieser von der Transportfläche 24 angehoben wird. Das Anheben kann mechanisch und/oder magnetisch und/oder elektromagnetisch und/oder durch ein Fluid, insbesondere Druckluft P, erfolgen.

### Bezugszeichenliste:

- 10: Anordnung
- 11: Transporteinrichtung
- 12: Revolverteller
- 13: Tasche
- 14: Rondenteil
- 15: Rondenring
- 16: Rondenkern
- 17: Prägestation

- 20: Zuführstation
- 21: Zuführvorrichtung
- 22: Aufnahmestelle
- 23: Abgabestelle
- 24: Transportfläche

- 27: Einführteil
- 28: Einführbahn
- 29: Einführkanal
- 30: Stutzen

- 34: Führungsdorn
- 35: oberes Ende des Führungsdorns
- 36: unteres Ende des Führungsdorns
- 37: Führungsabschnitt des Führungsdorns
- 38: Führungsfläche
- 39: konischer Abschnitt des Führungsdorns
- 40: Endabschnitt des Führungsdorns

- 44: Halteeinrichtung
- 45: Halteteil
- 46: Halteöffnung
- 47: Ringkanal
- 48: Axialabschnitt des Führungsdorns
- 49: Füllrohr

- 52: Zentrierhülse
- 53: Zentrierkanal
- 54: obere Öffnung des Zentrierkanals
- 55: untere Öffnung des Zentrierkanals
- 56: Haltekörper

- 60: Sackloch
- 61: Druckluftkanal

- 65: Permanentmagnet
- 66: Permanentmagnet

- A: Achse
- L: Längsachse
- N: Nordpol
- P: Druckluft
- R: Revolverachse
- S: Südpol

## Patentansprüche

1. Zuführvorrichtung (21) zum Zuführen von Rondenringen (15) zu einer Transporteinrichtung (10),
mit einem Führungsdorn (34) für die Rondenringe (15), der sich entlang einer Längsachse (L) von einem oberen Ende (35) zu einem unteren Ende (36) erstreckt,
mit einem Einführkanal (29), der dem oberen Ende (35) des Führungsdorns (34) zugeordnet ist und der koaxial zu der Längsachse (L) angeordnet ist,
mit einer Halteeinrichtung (44), die wenigstens ein Halteteil (45) mit einer koaxial zu der Längsachse (L) angeordneten Halteöffnung (46) aufweist, wobei die Innenabmessung der Halteöffnung (46) größer ist als die Außenabmessung des Führungsdorns (34), so dass in der Halteöffnung (46) ein Ringkanal (47) für die Rondenringe (15) vorhanden ist,
wobei der Führungsdorn (34) entlang der Längsachse (L) beweglich gelagert ist,
und wobei sich das untere Ende (36) des Führungsdorns (34) auf einer Transportfläche (24) für die Rondenringe (15) abstützt, **dadurch gekennzeichnet, dass** eine Antriebseinrichtung vorhanden und dazu eingerichtet ist, das untere Ende (36) des Führungsdorns (34) durch ein Magnetfeld oder ein körperloses Medium von der Transportfläche (24) anzuheben.

2. Zuführvorrichtung nach Anspruch 1,
**dadurch gekennzeichnet, dass** das obere Ende (35) des Führungsdorns (34) in den Einführkanal (29) hineinragt.

3. Zuführvorrichtung nach einem der vorhergehenden Ansprüche,
**dadurch gekennzeichnet, dass** der Führungsdorn (34) einen zylindrischen Führungsabschnitt (37) aufweist, dessen Außenabmessung um ein Führungsspiel kleiner ist als die Innenabmessung der Rondenringe (15).

4. Zuführvorrichtung nach Anspruch 3,
**dadurch gekennzeichnet, dass** der Führungsabschnitt (37) eine Mantelfläche aufweist, die als Führungsfläche (38) für die Rondenringe (15) dient.

5. Zuführvorrichtung nach Anspruch 3 oder 4,
**dadurch gekennzeichnet, dass** das obere Ende (35) des Führungsdorns (34) eine kleinere Außenabmessung aufweist als der der Führungsabschnitt (37).

6. Zuführvorrichtung nach einem der Ansprüche 3 bis 5,
**dadurch gekennzeichnet, dass** sich an den Führungsabschnitt (37) ein sich verjüngender Abschnitt (39) anschließt.

7. Zuführvorrichtung nach einem der vorhergehenden Ansprüche,
**dadurch gekennzeichnet, dass** die Halteeinrichtung (44) ein Füllrohr (45) aufweist, das zumindest einen Axialabschnitt des Führungsdorns (34) umschließt.

8. Zuführvorrichtung nach einem der vorhergehenden Ansprüche,
**dadurch gekennzeichnet, dass** die Halteeinrichtung (44) eine Zentrierhülse (52) aufweist, die koaxial zu der Längsachse (L) und benachbart zu dem unteren Ende (36) des Führungsdorns (34) angeordnet ist.

9. Zuführvorrichtung nach Anspruch 8,
**dadurch gekennzeichnet, dass** die Zentrierhülse (52) einen Zentrierkanal (53) aufweist, der sich nach unten zumindest an mehreren Umfangsstellen verjüngt.

10. Zuführvorrichtung nach einem der vorhergehenden Ansprüche,
**dadurch gekennzeichnet, dass** am untere Ende (36) des Führungsdorns (34) eine sich verjüngender Endabschnitt (40) vorhanden ist.

11. Zuführvorrichtung nach Anspruch 10,
**dadurch gekennzeichnet, dass** der Endabschnitt (40) eine Fase und/oder einen Radius aufweist.

12. Zuführvorrichtung nach einem der vorhergehenden Ansprüche,
**dadurch gekennzeichnet, dass** sich der Führungsdorn (34) jeweils mittels einem oder mehreren Rondenringen (15) in der wenigstens einen Halteöffnung (46) am Halteteil (45) abstützt.

## Claims

1. A feeding device (21) for feeding blank rings (15) to a transport assembly (10),
having a guide mandrel (34) for the blank rings (15), which extends along a longitudinal axis (L) from an upper end (35) to a lower end (36),
having an insertion channel (29), which is assigned to the upper end (35) of the guide mandrel (34) and which is arranged coaxially with the longitudinal axis (L),
having a holding arrangement (44), which has at least one holding part (45) with a holding opening (46) arranged coaxially with the longitudinal axis (L), wherein the inner dimension of the holding opening (46) is greater than the outer dimension of the guide mandrel (34), so that an annular channel (47) for the blank rings (15) is provided in the holding opening (46),
wherein the guide mandrel (34) is mounted movably along the longitudinal axis (L) and wherein the lower end (36) of the guide mandrel (34) is supported on a transport surface (24) for the blank rings (15),
**characterized in that** a drive arrangement is provided and configured to raise the lower end (36) of the guide mandrel (34) from the transport surface (24) by means of a magnetic field or a bodiless medium.

2. The feeding device according to claim 1, **characterised in that** the upper end (35) of the guide mandrel (34) protrudes into the insertion channel (29) .

3. The feeding device according to either one of the preceding claims,
**characterised in that** the guide mandrel (34) has a cylindrical guide portion (37), the outer dimension of which is smaller than the inner dimension of the blank rings (15) by a guide play.

4. The feeding device according to claim 3, **characterised in that** the guide portion (37) has a shell surface, which is used as a guide surface (38) for the blank rings (15).

5. The feeding device according to claim 3 or 4, **characterised in that** the upper end (35) of the guide mandrel (34) has a smaller outer dimension than the guide portion (37).

6. The feeding device according to any one of claims 3 to 5,
**characterised in that** a tapering portion (39) adjoins the guide portion (37).

7. The feeding device according to any one of the preceding claims,
**characterised in that** the holding arrangement (44) has a filling tube (45), which surrounds at least an axial section of the guide mandrel (34).

8. The feeding device according to any one of the preceding claims,
**characterised in that** the holding arrangement (44) has a centring sleeve (52), which is arranged coaxially with the longitudinal axis (L) and adjacently to the lower end (36) of the guide mandrel (34).

9. The feeding device according to claim 8,
**characterised in that** the centring sleeve (52) has a centring channel (53), which tapers downwardly at least at a plurality of peripheral sites.

10. The feeding device according to any one of the preceding claims,
**characterised in that** a tapering end portion (40) is provided at the lower end (36) of the guide mandrel (34) .

11. The feeding device according to claim 10,
**characterised in that** the end portion (40) has a chamfer and/or a radius.

12. The feeding device according to any one of the preceding claims,
**characterised in that** the guide mandrel (34) is supported on the holding part (45) in the at least one holding opening (46) by means of one or more blank rings (15).

## Revendications

1. Dispositif d'alimentation (21) destiné à amener des flans annulaires (15) à un dispositif de transport (10),
comprenant un mandrin de guidage (34) pour les flans annulaires (15), qui s'étend le long d'un axe longitudinal (L) depuis une extrémité supérieure (35) jusqu'à une extrémité inférieure (36),
comprenant un canal d'insertion (29) qui est associé à l'extrémité supérieure (35) du mandrin de guidage (34) et qui est disposé de façon coaxiale avec l'axe longitudinal (L),
comprenant un dispositif de support (44) qui présente au moins un élément de support (45) doté d'une ouverture de support (46) disposée de façon coaxiale avec l'axe longitudinal (L), la dimension intérieure de l'ouverture de support (46) étant supérieure à la dimension extérieure du mandrin de guidage (34), de sorte qu'un canal annulaire (47) pour les flans annulaires (15) est présent dans l'ouverture de support (46),
le mandrin de guidage (34) étant monté avec possibilité de déplacement le long de l'axe longitudinal (L),
et l'extrémité inférieure (36) du mandrin de guidage (34) prenant appui sur une surface de transport (24) pour les flans annulaires (15),
**caractérisé en ce qu'**il est prévu un dispositif d'entraînement qui est conçu pour soulever l'extrémité inférieure (36) du mandrin de guidage (34) depuis la surface de transport (24), par le biais d'un champ magnétique ou d'un milieu incorporel.

2. Dispositif d'alimentation selon la revendication 1,
**caractérisé en ce que** l'extrémité supérieure (35) du mandrin de guidage (34) pénètre dans le canal d'insertion (29).

3. Dispositif d'alimentation selon l'une des revendications précédentes,
**caractérisé en ce que** le mandrin de guidage (34) présente une portion de guidage (37) cylindrique dont la dimension extérieure est inférieure d'un jeu de guidage à la dimension intérieure des flans annulaires (15).

4. Dispositif d'alimentation selon la revendication 3,
**caractérisé en ce que** la portion de guidage (37) présente une surface enveloppe qui sert de surface de guidage (38) aux flans annulaires (15).

5. Dispositif d'alimentation selon la revendication 3 ou 4,
**caractérisé en ce que** l'extrémité supérieure (35) du mandrin de guidage (34) présente une dimension extérieure qui est plus petite que celui de la portion de guidage (37).

6. Dispositif d'alimentation selon l'une des revendications 3 à 5,
**caractérisé en ce qu'**une portion qui se rétrécit (39) se raccorde à la portion de guidage (37).

7. Dispositif d'alimentation selon l'une des revendications précédentes,
**caractérisé en ce que** le dispositif de support (44) présente un tube de remplissage (45) qui entoure au moins une portion axiale du mandrin de guidage (34).

8. Dispositif d'alimentation selon l'une des revendications précédentes,
**caractérisé en ce que** le dispositif de support (44) présente un manchon de centrage (52) qui est disposé de façon coaxiale avec l'axe longitudinal (L) et à proximité de l'extrémité inférieure (36) du mandrin de guidage (34).

9. Dispositif d'alimentation selon la revendication 8,
**caractérisé en ce que** le manchon de centrage (52) présente un canal de centrage (53) qui se rétrécit vers le bas, au moins en plusieurs points de la circonférence.

10. Dispositif d'alimentation selon l'une des revendications précédentes,
**caractérisé en ce qu'**une portion d'extrémité (40) qui se rétrécit est prévue à l'extrémité inférieure (36) du mandrin de guidage (34).

11. Dispositif d'alimentation selon la revendication 10,
**caractérisé en ce que** la partie d'extrémité (40) présente un chanfrein et/ou un rayon.

12. Dispositif d'alimentation selon l'une des revendications précédentes,
**caractérisé en ce que** le mandrin de guidage (34) est en appui dans l'ouverture de support (46), au nombre d'au moins une, de l'élément de support (45), respectivement par l'intermédiaire d'un ou plusieurs flans annulaires (15).
